(19) Europäisches Patentamt
European Patent Office
Office européen des brevets

(11) EP 3 379 483 A1

(12) EUROPEAN PATENT APPLICATION

(43) Date of publication:
26.09.2018 Bulletin 2018/39

(51) Int Cl.:
*G06Q 30/02* (2012.01)

(21) Application number: 18162183.0

(22) Date of filing: 16.03.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 22.03.2017 JP 2017056627

(71) Applicant: Toshiba TEC Kabushiki Kaisha
Tokyo 141-8562 (JP)

(72) Inventors:
• MINO, Hodaka
Shinagawa-ku,, Tokyo 141-8562 (JP)
• DEKURA, Hitoshi
Shinagawa-ku,, Tokyo 141-8562 (JP)
• WATANABE, Hirokazu
Shinagawa-ku,, Tokyo 141-8562 (JP)

(74) Representative: Takeuchi, Maya et al
Fédit-Loriot
38, avenue Hoche
75008 Paris (FR)

(54) **DIGITAL SIGNAGE CONTROL SYSTEM AND METHOD**

(57) A server for a digital signage control system communicates with a plurality of display devices, a first terminal, and a second terminal. The server further stores, for each display device, an identifier, attribute data, and owner data, and a plurality of content items. The server receives from the first terminal, a display request to display a content item on a display device having attributes that match display criteria included in the display request, transmits an approval request to the second terminal identified based on the display device owner data, and upon receiving from the second terminal approval to display the content item on the display device, store the content item in association with the identifier corresponding to the display device, and control the display device to display the content item in accordance with the display request.

FIG. 1

**Description**

FIELD

The present invention relates to the field of advertisement displaying technologies in general, and embodiments described herein relate in particular to a digital signage control system and method.

BACKGROUND

In stores, public facilities, transportation facilities, and the like, digital signage is widespread as a medium for transmitting advertisement content to a consumer, that is, a so-called advertisement medium. The digital signage transmits the advertisement content by using an electronic display apparatus. For this reason, various video advertisements can be developed, and thus the utility value is high.

To solve such problem, there is provided a digital signage control system including a server for managing content distribution to a plurality of display devices making up the digital signage, said server comprising:

a communication interface in communication with a plurality of display devices, a first terminal corresponding to a client content provider, and a second terminal;
a storage device that stores:

a display device database including, for each of the plurality of display devices: a display device identifier, display device attribute data, and display device owner data, and
a content management database configured to store a plurality of content items each in association with at least one of the display device identifiers; and

a processor configured to:

receive, from the first terminal, a display request to display a content item on a selected one of the plurality of display devices, the display request including the requested content item and display criteria,
identify a selected display device for which the corresponding display device attribute data matches the display criteria,
transmit an approval request to the second terminal identified based on the display device owner data, the approval request including the requested content item,
receive, from the second terminal and in response to the approval request, approval to display the content item on the selected display device,
after the approval is received, store the content item in the content management database in association with the display device identifier corresponding to the selected display device, and
control the selected display device to display the content item in accordance with the display request.

Preferably, the display device attribute data includes location information indicating a physical location of a corresponding display device.

Preferably still, selected display device is identified by comparing location criteria included in the display criteria to the location information.

Preferably yet, the display request further includes a requested time for displaying the content item, and the processor controls the selected display device to display the content item during the requested time.

Suitably, the storage device further stores a client database including a plurality of client identifiers and corresponding client attribute data, each client identifier and client attribute data corresponding to a different client content provider, and

the display request includes a client identifier corresponding to a client content provider associated with the first terminal.

Suitably still, the display device attribute data includes amount information regarding a cost of displaying a content item in the corresponding display device, and

the processor is further configured to:

calculate an estimated cost of displaying the content item included in the display request on the basis of the amount information, and
notify the first terminal of the estimated cost.

Suitably yet, the plurality of display devices are each digital display devices.

Typically, the plurality of display devices are each point of sale devices that display the content item by printing the content item on a receipt.

Typically still, the plurality of display devices are each point of sale devices that display the content item by adding the content item to an electronic receipt.

The invention also relates to a method for managing content distribution comprising:

> storing a display device database including, for each of a plurality of display devices: a display device identifier, display device attribute data, and display device owner data;
>
> receiving, from a first terminal, a display request to display a content item on a selected one of the plurality of display devices, the display request including the requested content item and display criteria;
>
> identifying a selected display device for which the corresponding display device attribute data matches the display criteria;

transmitting an approval request to a second terminal identified based on the display device owner data, the approval request including the requested content item;

receiving, from the second terminal and in response to the approval request, approval to display the content item on the selected display device;

after the approval is received, storing the content item in association with the display device identifier corresponding to the selected display device; and

control the selected display device to display the content item in accordance with the display request.

Preferably, the display device attribute data includes location information indicating a physical location of a corresponding display device.

Preferably still, the selected display device is identified by comparing location criteria included in the display criteria to the location information.

Preferably yet, the display request further includes a requested time for displaying the content item, and the selected display device is controlled to display the content item during the requested time.

Suitably, the method further comprises:

storing a client database including a plurality of client identifiers and corresponding client attribute data, each client identifier and client attribute data corresponding to a different client content provider, wherein the display request includes a client identifier corresponding to a client content provider associated with the first terminal.

Suitably still, the display device attribute data includes amount information regarding a cost of displaying a content item in the corresponding display device, the method further comprising:

> calculating an estimated cost of displaying the content item included in the display request on the basis of the amount information; and
>
> notifying the first terminal of the estimated cost.

The invention further relates to a non-transitory computer readable medium containing executable instructions that cause a server to perform a method for managing content distribution, the method comprising:

> storing a display device database including, for each of a plurality of display devices: a display device identifier, display device attribute data, and display device owner data;
>
> receiving, from a first terminal, a display request to display a content item on a selected one of the plurality of display devices, the display request including the requested content item and display criteria;
>
> identifying a selected display device for which the corresponding display device attribute data matches the display criteria;

transmitting an approval request to a second terminal identified based on the display device owner data, the approval request including the requested content item;

receiving, from the second terminal and in response to the approval request, approval to display the content item on the selected display device;

after the approval is received, storing the content item in association with the display device identifier corresponding to the selected display device; and

control the selected display device to display the content item in accordance with the display request.

Preferably, the display device attribute data includes location information indicating a physical location of a corresponding display device.

Preferably still, the selected display device is identified by comparing location criteria included in the display criteria to the location information.

Preferably yet, the display request further includes a requested time for displaying the content item, and the selected display device is controlled to display the content item during the requested time.

Suitably, the method further comprising:

storing a client database including a plurality of client identifiers and corresponding client attribute data, each client identifier and client attribute data corresponding to a different client content provider, wherein the display request includes a client identifier corresponding to a client content provider associated with the first terminal.

The invention also concerns a sever for managing content distribution to a plurality of display devices making up a digital signage, the server comprising:

a communication interface in communication with a plurality of display devices, a first terminal corresponding to a client content provider, and a second terminal;
a storage device that stores:

a display device database including, for each of the plurality of display devices: a display device identifier, display device attribute data, and display device owner data, and
a content management database configured to store a plurality of content items each in association with at least one of the display device identifiers; and

a processor configured to:

receive, from the first terminal, a display request to display a content item on a selected one of the plurality of display devices, the display request including the requested content item and display criteria,
identify a selected display device for which the corresponding display device attribute data matches the display criteria,
transmit an approval request to the second terminal identified based on the display device owner data, the approval request including the requested content item,
receive, from the second terminal and in response to the approval request, approval to display the content item on the selected display device,
after the approval is received, store the content item in the content management database in association with the display device identifier corresponding to the selected display device, and

control the selected display device to display the content item in accordance with the display request.

DESCRIPTION OF THE DRAWINGS

The above and other objects, features and advantages of the present invention will be made apparent from the following description of the preferred embodiments, given as non-limiting examples, with reference to the accompanying drawings, in which:

FIG. 1 is a diagram illustrating a configuration of an advertisement management system according to an embodiment.
FIG. 2 is a diagram illustrating data records that are stored in a client database included in an advertisement management device of the advertisement management system.
FIG. 3 is a diagram illustrating data records that are stored in a medium database included in the advertisement management device.
FIG. 4 is a diagram illustrating data records that are stored in an advertisement database included in the advertisement management device.
FIG. 5 is a block diagram illustrating a hardware configuration of the advertisement management device.
FIG. 6 is a flow chart illustrating a placement managing process of the advertisement management device.
FIG. 7 is a flow chart illustrating an examination management process of the advertisement management device.
FIG. 8 is a flow chart illustrating a distribution management process of the advertisement management device.

DETAILED DESCRIPTION

According to an embodiment of digital signage control system and method, a server is provided for managing content distribution to the digital signage. A communication interface communicates with a plurality of display devices that make up the digital signage, a first terminal corresponding to a client content provider, and a second terminal. A display device database includes, for each of the plurality of display devices: a display device identifier, display device attribute data, and display device owner data. A content management database stores a plurality of content items each in association with at least one of the display device identifiers. A processor receives, from the first terminal, a display request to display a content item on a selected one of the plurality of display devices, the display request including the requested content item and display criteria. The processor identifies a selected display device for which the corresponding display device attribute data matches the display criteria, and transmits an approval request to the second terminal identified based on the display device owner data, the approval request including the requested content item. The processor receives, from the second terminal and in response to the approval request, approval to display the content item on the selected display device, and after the approval is received, stores the content item in the content management database in association with the display device identifier corresponding to the selected display device. The server controls the selected display device to display the content item in accordance with the display request.

Hereinafter, an embodiment of an advertisement management device, an advertisement management method, and a control program will be described with reference to the drawings.

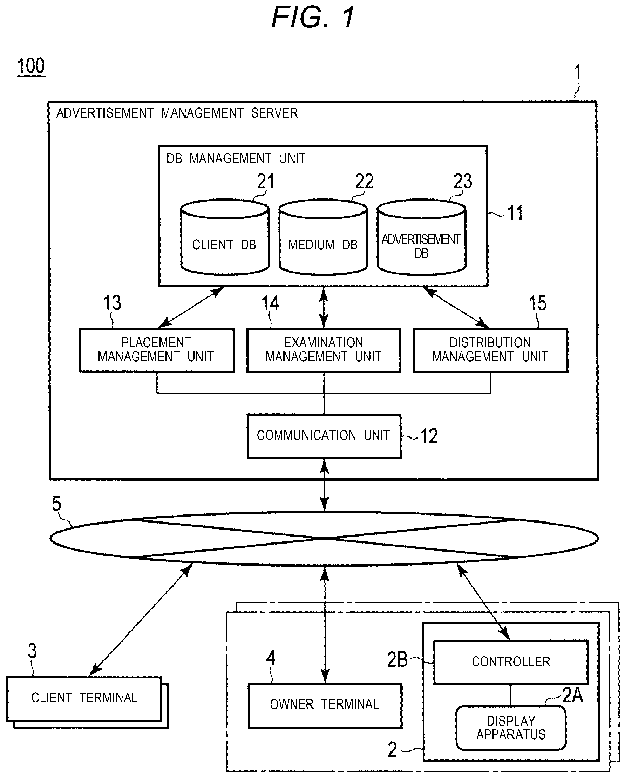

FIG. 1 is a diagram illustrating a configuration of an advertisement management system 100. The advertisement management system 100 includes an advertisement management server 1, a digital signage 2, a client terminal 3, an owner terminal 4, and the Internet 5. The digital signage 2 includes a display apparatus 2A such as a liquid crystal display or an LED display, and a controller 2B. The controller 2B displays transmitted information, for example, an advertisement content of a still image or a moving image, on the display apparatus 2A in accordance with a predetermined schedule.

The client terminal 3 is an information terminal owned by a person who requests an advertisement using the digital signage 2, that is, an advertisement client. The client terminal 3 functions as a first terminal. The client terminal 3 includes an input device, a display device, and a communication interface. The communication interface performs data communication through the Internet 5, and may be a communication interface based on a wired communication protocol or a wireless communication protocol. As the client terminal 3, a smart phone, a tablet terminal, a personal computer, and the like may be used.

For example, any person or entity, such as a retailer, that desires to place an advertisement can be an advertisement client. The advertisement client needs to acquire an account for using the system. The account can be acquired, for example, by operating the client terminal 3 to access a predetermined Web site via the Internet 5.

The owner terminal 4 is an information terminal owned by the owner of the digital signage 2. The owner terminal 4 functions as a second terminal. The owner terminal 4 includes an input device, a display device, and a communication interface. The communication interface performs data communication through the Internet 5, and may be a communication interface based on a wired communication protocol or a wireless communication protocol. As the owner terminal 4, a smart phone, a tablet terminal, a personal computer, and the like may be used.

An owner installs each digital signage 2 in stores, public facilities, transportation facilities, and the like. For example, in a case of digital signage 2 installed in a store, a person in charge of the store is the owner. For example, in a case of digital signage 2 installed in a public facility, a person in charge of the facility is the owner. For example, in a case of digital signage 2 installed in a transportation facility, a person in charge of the transportation facility is the owner. The owner is not particularly limited. In addition, the same person may be the owner of each of a plurality of pieces of digital signage 2.

The advertisement management server 1 is a computer system, and is installed at, for example, a data center. The advertisement management server 1 may be configured under a cloud computing environment. The advertisement management server 1 functions as an advertisement management device.

The advertisement management server 1 includes a database management unit (hereinafter, referred to as a DB management unit) 11, a communication unit 12, a placement management unit 13, an examination management unit 14, and a distribution management unit 15. Details of the placement management unit 13, the examination management unit 14, and the distribution management unit 15 will be described later.

The communication unit 12 is a communication interface connected to the Internet 5. The communication unit 12 communicates with the client terminal 3, the owner terminal 4, and the digital signage 2 through the Internet 5.

The database management unit 12 manages a client database (hereinafter, referred to as a client DB) 21, a medium database (hereinafter, referred to as a medium DB) 22, and an advertisement database (hereinafter, referred to as an advertisement DB) 23. The client DB 21 stores data corresponding to an advertisement client. The medium DB 22 stores data corresponding to the digital signage 2 which is an advertisement medium. The advertisement DB 23 stores data corresponding to an advertisement content.

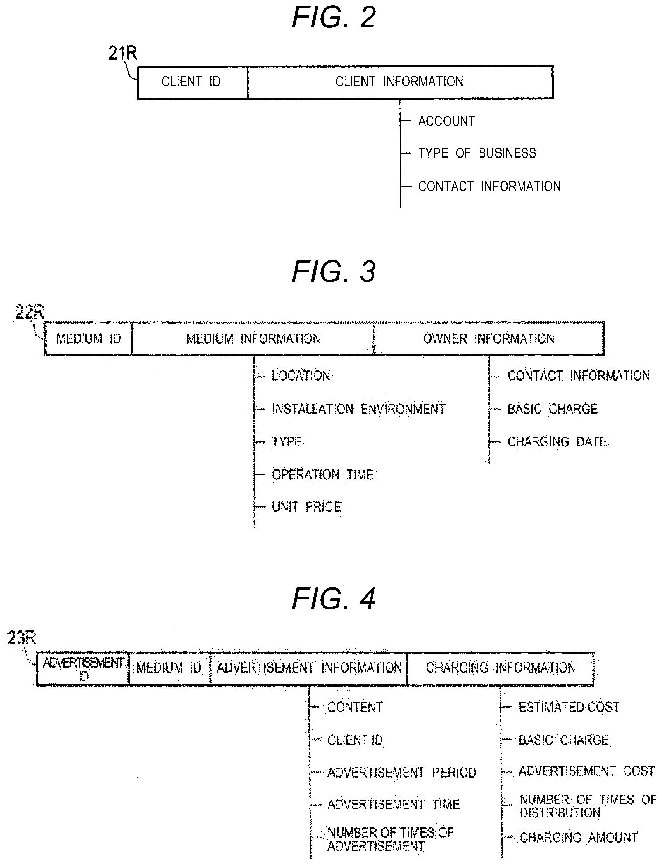

FIG. 2 illustrates a data record 21R (hereinafter, referred to as a client record 21R) which is stored in the client DB. As illustrated in FIG. 2, the client record 21R includes a client ID and client information. The client record 21R may include other pieces of information.

The client ID is identification information allocated for each client in order to identify an advertisement client.

The client information includes an account, a type of business, contact information, and the like as attribute information on an advertisement client corresponding to a client ID. The account is information corresponding to an account, for example, a user name, a password, or the like, which is used by the advertisement client to access the system. The type of business is a type of business conducted by the advertisement client. The contact information is a communication address of the client terminal 3 owned by the advertisement client. The communication address is information which is necessary for the advertisement management server 1 to communicate with the client terminal 3. The communication address may be, for example, a communication address on the Internet 5 which is set in the client terminal 3 or an email address which is used in email software installed in the client terminal 3.

The client DB 21 collectively stores the client records 21R related to each advertisement client that has an account.

FIG. 3 illustrates a data record 22R (hereinafter, referred to as a medium record 22R) which is stored in the medium DB 22. As illustrated in FIG. 3, the medium record 22R includes a medium ID, medium information, and owner information. The medium record 22R may include other pieces of information.

The medium ID is identification information allocated for each digital signage 2 in order to identify the digital signage 2.

The medium information includes a location, an installation environment, a type, an operation time, a unit price, and the like as attribute information related to the digital signage 2 identified by the medium ID. The location is a name of a place or an address where the digital signage 2 is installed. The location may be positional information on a map, or the like. The installation environment indicates an environment where the digital signage 2 is installed. For example, in a case of the digital signage 2 installed in a store, a storefront, a food department, a clothing shop, and the like are stored in the medium record 22R as information on the installation environment. For example, in a case of the digital signage 2 installed in a public facility, an entrance, a lobby, a square, and the like are stored in the medium record 22R as information on the installation environment. For example, in a case of the digital signage 2 installed in a transportation facility, a concourse, the inside of a vehicle, a home, and the like are stored in the medium record 22R as information on the installation environment. The installation environment may be an image obtained by imaging the digital signage 2 installed in a predetermined place. The type is a type of display apparatus 2A of the digital signage 2. For example, information such as a display element, a size, and a resolution of a display is included in the type. The operation time is a time for which the digital signage 2 operates as an advertisement medium. For example, in a case of the digital signage 2 that operates from 9:00 a.m. to 8:00 p.m., "9:00 to 20:00" is an operation time. For example, in a case of the digital signage 2 that operates for 24 hours, "0:00 to 0:00" is an operation time. The unit price is price information generated with respect to an advertisement per unit time during which the digital signage 2 is used.

The owner information includes contact information, a basic charge, a charging date, and the like as attribute information on the owner of the digital signage 2 identified by the medium ID. The contact information is a communication address of the owner terminal 4 owned by the owner. The communication address is information which is necessary for the advertisement management server 1 to communicate with the owner terminal 4. The communication address may be, for example, a communication address on the Internet 5 which is set in the owner terminal 4 or an email address which is used in email software installed in the owner terminal 4. The basic charge is fixed amount information which is set as a charge for using an advertisement with respect to the digital signage 2 identified by the medium ID. The charging date is a date when an advertisement using the digital signage 2 is charged to the advertisement client.

The medium DB 22 collectively stores the medium records 22R related to the digital signage 2 managed by the advertisement management server 1.

FIG. 4 illustrates a data record 23R (hereinafter, referred to as an advertisement record 23R) which is stored in the advertisement DB 23. As illustrated in FIG. 4, the advertisement record 23R includes an advertisement ID, a medium ID, advertisement information, and charging information. It is needless to say that the advertisement record 23R may include other pieces of information.

The advertisement ID is identification information which is allocated for each advertisement content in order to identify an advertisement content distributed to the digital signage 2. The medium ID is identification information of the digital signage 2 which is a distribution destination of the advertisement content identified by the advertisement ID.

The advertisement information includes an advertisement content identified by an advertisement ID, a client ID of an advertisement client who places the advertisement content, an advertisement period, an advertisement time, the number of times of advertisement, and the like of the advertisement content. The advertisement period is a period of time for which advertisement based on the advertisement content is performed. For example, in a case where advertisement is performed from April 1 to April 10, a starting date "April 1" and an ending date "April 10" are stored in the advertisement record 23R. Alternatively, the starting date "April 1" and a period of time "10 days" may be stored in the advertisement record 23R. The advertisement time is a time required for each advertisement based on the advertisement content. For example, in a case of an advertisement content including a 30-second moving image, "30 seconds" is stored in the advertisement record 23R as an advertisement time. The number of times of advertisement is the number of times of advertisement of the advertisement content which is performed per day. For example, in a case where advertisement is performed 100 times per day, the number of times of advertisement "100 times" is stored in the advertisement record 23R.

The charging information includes an estimated cost, a basic charge, an advertisement cost, the number of times of distribution, a charging amount, and the like. The estimated cost is a cost generated in a case where the advertisement based on the advertisement content is transmitted by the digital signage 2 identified by the medium ID for the advertisement period. The basic charge is fixed amount information which is set as a charge for using an advertisement with respect to the digital signage 2 identified by the medium ID. The advertisement cost is a cost in a case where the advertisement based on the advertisement content is performed by the digital signage 2 according to the number of times of advertisement. The number of times of distribution is the number of times of distribution of the advertisement content from the advertisement management server 1 to the digital signage 2. In this embodiment, the advertisement content is distributed to the digital signage 2 once a day. The charging amount is an amount at the present point in time when the advertisement content is charged to the advertisement client who places the advertisement content.

The advertisement cost is calculated by the following Expression (1).

$$(1) \quad \text{Advertisement cost= [unit price*(advertisement time/unit time)]*the number of times of advertisement}$$

The charging amount is calculated by the following Expression (2).

$$(2) \quad \text{Charging amount=basic charge+(advertisement cost*the number of times of distribution)}$$

The estimated cost is calculated by the following Expression (3).

$$(3) \quad \text{Cost estimated amount=basic charge+(advertisement cost*the number of days of advertisement period)}$$

The above computational expressions for calculating the advertisement cost, the charging amount, and the estimated cost are not limited to the above-described expressions. The computational expressions are computational expressions based on a charge contract made between the operator of the advertisement management server 1 and the owner of the digital signage 2.

The advertisement DB 23 collectively stores the advertisement records 23R related to the advertisement content transmitted from the digital signage 2.

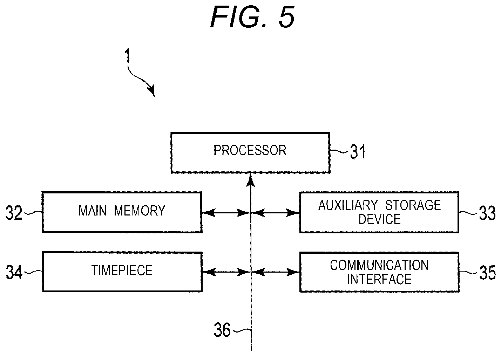

FIG. 5 is a block diagram illustrating a hardware configuration of the advertisement management server 1. The advertisement management server 1 includes a controller and units connected to the controller. The controller includes a processor 31 which is a Central Processing Unit (CPU) or a Micro Processing Unit (MPU), and a main memory 32. The advertisement management server 1 includes an auxiliary storage device 33, a timepiece 34, and a communication interface 35. In addition, the advertisement management server 1 includes a system transmission path 36. The system transmission path 36 includes an address bus, a data bus, and the like. The advertisement management server 1 functions as a computer by connecting the processor 31 and other components by the system transmission path 36.

The processor 31 is equivalent to a central processor of the computer. The processor 31 controls each unit in order to realize various functions as the advertisement management server 1 in accordance with an operating system or an application software.

The main memory 32 is a main storage device of the computer. The main memory 32 includes a non-volatile memory region and a volatile memory region. The main memory 32 stores the operating system or the application software in the non-volatile memory region. The main memory 32 uses the volatile memory region as a work area or the like in which data is appropriately rewritten by the processor 31.

The auxiliary storage device 33 is an auxiliary storage device of the computer. For example, an Electric Erasable Programmable Read-Only Memory (EEPROM), a Hard Disc Drive (HDD), a Solid State Drive (SSD), or the like is used as the auxiliary storage device 123.

The timepiece 34 clocks the present date and time. The communication interface 35 is an interface that communicates with other apparatuses connected through the Internet 5.

In such a hardware configuration, the communication interface 35 functions as the communication unit 12. The processor 31 controls the auxiliary storage device 33 to function as the DB management unit 11. In addition, the main memory 32 stores a control program (application software) for causing the processor 31 to function as the placement management unit 13, the examination management unit 14, and the distribution management unit 15. The control program may be stored in the auxiliary storage device 33. In this case, a control program recorded in a removable recording medium is written in the auxiliary storage device 33. Alternatively, the control program is written in the auxiliary storage device 33 by communication through a network. The recording medium may have any form as long as the recording medium can store programs like a CD-ROM or a memory card and can be read by the advertisement management server 1.

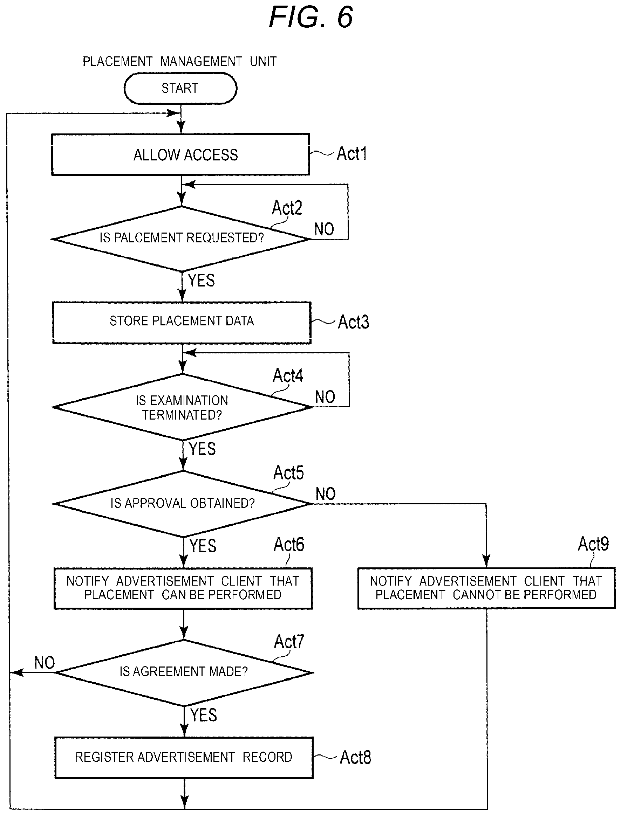

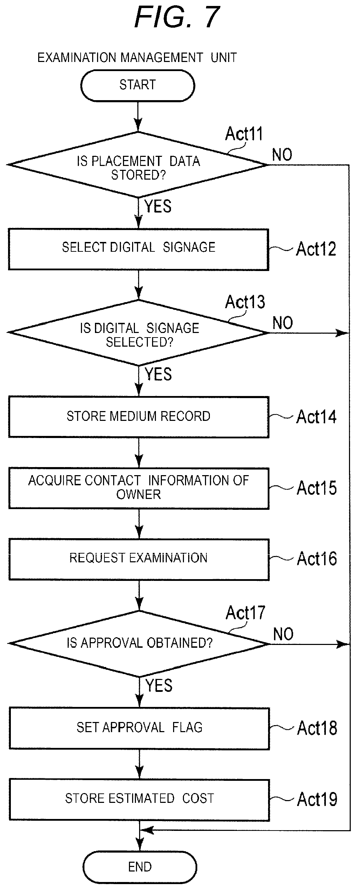

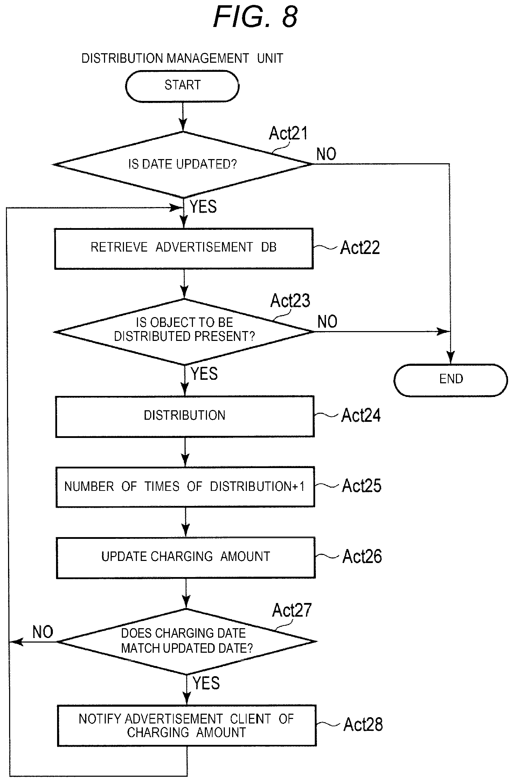

FIG. 6 is a flow chart illustrating a processing procedure of the processor 31 functioning as the placement management unit 13. FIG. 7 is a flow chart illustrating a processing procedure of the processor 31 functioning as the examination management unit 14. FIG. 8 is a flow chart illustrating a processing procedure of the processor 31 functioning as the distribution management unit 15. Hereinafter, the operation of the processor 31 will be described using the flow charts of FIGS. 6 to 8. Meanwhile, contents of processes illustrated in FIGS. 6 to 8 and described below are examples. The processing procedures and the processing contents are not particularly limited as long as the same results can be obtained.

The function of the placement management unit 13 is a residence function. That is, the processor 31 operates as the placement management unit 13 during the operation of the system. On the other hand, the functions as the examination management unit 14 and the distribution management unit 15 are interruption functions. The processor 31 operates as the examination management unit 14 by using placement data, to be described later, that is stored in the main memory 32 as a trigger. The processor 31 operates as the distribution management unit 15 by using a time, clocked by the timepiece 34, being set to be a predetermined time as a trigger.

First, when the operation as the placement management unit 13 is started, the processor 31 controls the digital signage 2 so as to be accessed via the Internet 5 on the basis of the medium record 22R stored in the medium DB 22 (FIG. 6, Act1). By this control, information such as a location, an installation environment, a type, an operation time, a unit price, and a basic charge of each digital signage 2 managed by the advertisement management server 1 can be retrieved over the Internet 5. An advertisement client logging on the system can view the retrieved information on each digital signage 2 by using a browser or the like of the client terminal 3. Viewing can be performed by using an information terminal, and an account may be acquired when an advertisement is newly requested.

The advertisement client views the retrieved information on the digital signage 2, and determines placement conditions such as an area where the advertisement is desired to be placed, an installation environment, an advertisement period, the number of times of advertisement, and a budget. The advertisement client operates the client terminal 3 to input the placement conditions together with an advertisement content. The advertisement content which is input through the client terminal 3 and information regarding the placement conditions are transmitted to the advertisement management server 1 as placement data through the Internet 5 together with a client ID of the advertisement client.

The processor 31 controlling the digital signage 2 waits for the placement data (FIG. 6, Act2). When the placement data is received from the client terminal 3 through the Internet 5 (YES in Act2), the processor 31 stores the placement data in the main memory 32 in association with the client ID received together with the data (FIG. 6, Act3).

In this manner, when the placement data is stored in the main memory 32, the processor 31 starts an operation as the examination management unit 14. First, the processor 31 confirms that the placement data is stored in the main memory 32 (FIG. 7, Act11). In a case where the processor can confirm that the placement data is stored in the main memory (YES in Act11), the processor 31 selects the digital signage 2 which is a distribution destination of an advertisement content included in the placement data (Act12).

That is, the processor 31 retrieves a medium database 22 to select the digital signage 2 satisfying the placement conditions included in the placement data. Specifically, the processor 31 first detects the medium record 22R including medium information in which an area and an installation environment match the placement conditions. Subsequently, the processor 31 confirms whether or not the budget is satisfied based on the unit price and the basic charge of the detected medium record 22R and the advertisement period and the number of times of advertisement which are the placement conditions. That is, the processor 31 calculates an estimated cost by using the above-described Expressions (1) and (3), and confirms whether or not the estimated cost falls inside the budget. The processor 31 selects the digital signage 2 identified by the medium ID of the medium record 22R in which the estimated cost is within the budget.

The processor 31 may select all pieces of digital signage 2 satisfying the placement conditions. The processor 31 may also determine an upper limit of the number of pieces of digital signage 2 selected, and in such a case, the processor 31 does not select a number of pieces of digital signage 2 exceeding the upper limit.

The processor 31 confirms whether or not the digital signage 2 satisfying the placement conditions is selected (FIG. 7, Act13). In a case where a digital signage 2 satisfying the placement conditions cannot be selected (NO in Act13), the processor 31 terminates the operation as the examination management unit 14.

In a case where the digital signage 2 satisfying the placement conditions is selected (YES in Act13), the processor 31 reads out the medium record 22R including the medium ID of the selected digital signage 2 from the medium DB 22. The processor 31 stores data of the medium record 22R, that is, a medium ID, medium information, and owner information in the main memory 32 in association with the placement data (FIG. 7, Act14). Therefore, in a case where a plurality of pieces of digital signage 2 are selected, the processor 31 stores pieces of data of the medium records 22R regarding the respective pieces of digital signage 2 in the main memory 32 in association with the placement data.

Hereinafter, a description will be given of a case where one piece of digital signage 2 is selected, that is, a case where the number of types of data of the medium record 22R associated with placement data is one. In a case where a plurality of pieces of digital signage 2 are selected, that is, in a case where the number of types of data of the medium record 22R associated with the placement data is two or more, the following operation may be repeated for each of the types.

The processor 31 acquires contact information from the owner information of the medium record 22R stored in the main memory 32 (FIG. 7, Act15). The processor 31 controls the communication interface 35 so as to transmit a command (hereinafter, referred to as a first command) for requesting examination of an advertisement content included in the placement data by using the acquired contact information as a destination (FIG. 7, Act16). The first command includes the advertisement content included in the placement data. In addition, the first command also includes a type of business of the client information stored in the client DB 21 in association with a client ID included in the placement data, and the like. The first command is transmitted to the owner terminal 4 through the Internet 5.

The owner terminal 4 receiving the first command notifies the owner that the examination is requested. For example, the owner terminal 4 displays an image indicating that the examination is requested on a display device. The owner confirming the request for the examination operates the owner terminal 4 to perform the examination of the advertisement content. That is, the owner displays the advertisement content on the display device to confirm the contents thereof, and determines whether to approve the advertisement content to be displayed on the digital signage 2 of the owner. At this time, the owner may consider the type of business and the like of the advertisement client. The owner operates the owner terminal 4 to notify the advertisement management server 1 of an examination result, that is, approval or disapproval.

The processor 31 requesting the examination of the advertisement content waits for the examination result from the owner terminal 4 (FIG. 7, Act17). In a case where the examination result indicates approval (YES in Act17), the processor 31 sets an approval flag in association with the data of the medium record 22R stored in the main memory 32 (FIG. 7, Act18). In addition, the processor 31 calculates an estimated cost by using the above-described Expressions (1) and (3), and stores the estimated cost in the main memory 32 in association with the data of the medium record 22R (FIG. 7, Act19). In this manner, the processor 31 terminates the operation as the examination management unit 14. Meanwhile, in a case where the examination result indicates disapproval (NO in Act17), the processor 31 terminates the operation as the examination management unit 14 without performing the processes of Act18 and Act19.

Therefore, in a case where the examination result indicates approval, the data of the medium record 22R, the approval flag, and the estimated cost are stored in the main memory 32 in association with the placement data.

Meanwhile, in a case where the placement data is not stored in the main memory 32 in Act11 (NO in Act11), the processor 31 terminates the operation as the examination management unit 14 at that point in time.

The description now returns to the operation as the placement management unit 13.

After the placement data is stored in the main memory 32 in Act3, the processor 31 waits for the termination of the operation as the examination management unit 14 (FIG. 6, Act4). When the operation as the examination management unit 14 is terminated (YES in Act4), the processor 31 confirms whether or not approval is obtained in the examination (Act5).

In a case where an approval flag is stored in association with the placement data, that is, approval is obtained in the examination (YES in Act5), the processor 31 notifies the advertisement client that placement can be performed (Act6). That is, the processor 31 acquires contact information of the advertisement client from the client information stored in the client DB 21 in association with the client ID included in the placement data. The processor 31 controls the communication interface 35 so as to transmit a command (hereinafter, referred to as a second command) for notifying the advertisement client that placement can be performed, by using the acquired contact information as a destination. The second command includes the data of the medium record 22R, which is stored in association with the placement data, and an estimated cost.

The client terminal 3 receiving the second command notifies the advertisement client that placement can be performed. For example, the client terminal 3 displays information, such as a location, installation information, a type, an operation time, a unit price, a basic charge, and an estimated cost of the digital signage 2, on the display device. The advertisement client determines whether to agree that the placed advertisement content is transmitted by the notified digital signage 2. The advertisement client operates the client terminal 3 to respond to the advertisement management server 1 about whether to agree with the transmission.

The processor 31 notifying the advertisement client that placement can be performed waits for a response indicating whether to agree with the transmission from the client terminal 3 (FIG. 6, Act7). In a case where the processor receives a response indicating the advertisement client agrees with the transmission (YES in Act7), the processor 31 registers a new advertisement record 23R in the advertisement DB 23 (Act8). That is, the processor 31 generates a new advertisement ID. In addition, the processor 31 acquires a medium ID and a basic charge from the data of the medium record 22R stored in the main memory 32. In addition, the processor 31 also acquires an estimated cost. Further, the processor 31 acquires a client ID and advertisement information (a content, an advertisement period, an advertisement time, the number of times of advertisement, and the like) from the placement data stored in the main memory. The processor 31 generates a new advertisement record on the basis of the acquired pieces of data, and registers the generated advertisement record in the advertisement DB 23.

On the other hand, in a case where the processor receives a response indicating the advertisement client does not agree with the transmission (NO in Act7), the processor 31 does not perform the process of Act8.

In addition, in a case where an approval flag is not stored in Act5, that is, in a case where approval is not obtained in the examination (NO in Act5), the processor 31 notifies the advertisement client that placement cannot be performed (Act9). That is, the processor 31 acquires contact information of the advertisement client from the client information stored in the client DB 21 in association with the client ID included in the placement data. The processor 31 controls the communication interface 35 so as to transmit a command (hereinafter, referred to as a third command) for notifying the advertisement client that placement cannot be performed, by using the acquired contact information as a destination. The third command includes, for example, message data for notifying the advertisement client that placement cannot be performed.

The client terminal 3 receiving the third command notifies the advertisement client that placement cannot be performed. For example, the client terminal 3 displays a message image on the display device notifying the advertisement client that placement cannot be performed.

When the above-described processing is terminated, the processor 31 returns to the process of Act1. That is, the processor 31 performs control so as to allow access to the digital signage 2 through the Internet 5. If a request for the placement of an advertisement is received from the client terminal 3 through the Internet 5, the process of Act3 and the subsequent processes are repeated.

Next, the operation as the distribution management unit 15 will be described. The processor 31 starts the operation as the distribution management unit 15 whenever a time clocked by the timepiece 34 reaches a predetermined time.

First, the processor 31 confirms whether or not a date is updated from the previous operation (FIG. 8, Act21). In a case where a date is not updated (NO in Act21), the processor 31 terminates the operation as the distribution management unit 13.

On the other hand, in a case where a date is updated (YES in Act21), the processor 31 retrieves the advertisement DB 23 (FIG. 8, Act22). The processor 31 determines whether or not the advertisement record 23R in which the updated date is included in an advertisement period is present (FIG. 8, Act23).

In a case where the advertisement record 23R in which the updated date is included in the advertisement period is detected (YES in Act23), the processor 31 controls the communication interface 35 so as to distribute advertisement information corresponding to the advertisement record 23R to the digital signage 2 identified by the medium ID of the advertisement record 23R (FIG. 8, Act24). By this control, advertisement information, such as a content, an advertisement period, an advertisement time, and the number of times of advertisement, are distributed from the advertisement management server 1 to the digital signage 2 through the Internet 5.

Incidentally, the controller 2B of the digital signage 2 receiving the advertisement information creates a schedule of advertisement distribution on the basis of the advertisement information. In this manner, an advertisement content of a still image or moving image is displayed on the display apparatus 2A of the digital signage 2 in accordance with the schedule.

Meanwhile, the processor 31 controlling the distribution of the advertisement content increments the number of times of distribution of the advertisement record 23R by "1" (FIG. 8, Act25). The processor 31 calculates a charging amount by using the above-described Expressions (1) and (2), and updates the charging amount of the advertisement record 23R (FIG. 8, Act26).

The processor 31 confirms whether or not a charging date of the medium record 22R in which the medium ID of the advertisement record 23R is set matches the updated date (FIG. 8, Act27). In a case where the charging date matches the updated date (YES in Act27), the processor 31 acquires a client ID from the advertisement information of the advertisement record 23R. In addition, the processor 31 acquires contact information of the advertisement client from the client information stored in the client DB 21 in association with the acquired client ID. The processor 31 controls the communication interface 35 so as to transmit a command (hereinafter, referred to as a fourth command) for notifying the advertisement client of the charging amount by using the acquired contact information as a destination. The fourth command includes a charging amount included in medium information of the advertisement record 23R. In addition, the fourth command may include information such as a basic charge, an advertisement cost, and the number of times of distribution.

The client terminal 3 receiving the fourth command notifies the advertisement client that a cost is charged. For example, the client terminal 3 displays information such as a charging amount on the display device.

When the process of Act28 is terminated, the processor 31 returns to the process of Act22. In addition, also in a case where the charging date does not match to the updated date (NO in Act27), the processor 31 returns to the process of Act22 without performing the process of Act28. That is, the processor 31 continuously retrieves the advertisement DB 23. The processor 31 performs the processes of Act24 to Act28 whenever detecting the advertisement record 23R to be distributed. When the detection of all of the advertisement records 23R to be distributed is terminated (NO in Act23), the processor 31 terminates the operation as the distribution management unit 15.

In this manner, the advertisement management server 1 includes the communication unit 12 that communicates with the digital signage 2 installed in a store, a public facility, a transportation facility, or the like. The advertisement management server 1 can also communicate with the client terminal 3 owned by the advertisement client and the owner terminal 4 owned by the owner of the digital signage 2 through the communication unit 12.

In addition, the advertisement management server 1 includes the medium DB 22 that stores medium information including at least the location and the installation location of the digital signage 2 in association with a medium ID for identifying each digital signage 2. The processor 31 of the advertisement management server 1 has a function of allowing access of a location, an installation environment, a type, and the like of each digital signage 2 to the client terminal 3 on the basis of the medium information stored in the medium DB 22, and receiving an advertisement content and placement conditions of the advertisement content from the client terminal 3.

Further, when the processor 31 receives the advertisement content and the placement conditions, the processor selects the digital signage 2 satisfying the placement conditions of the advertisement content as a distribution destination of the advertisement content on the basis of the medium information stored in the medium DB 22. The processor 31 has a function of requesting the owner terminal 4 of the owner of the selected digital signage 2 to examine the advertisement content and receiving an examination result from the owner terminal 4.

In addition, the advertisement management server 1 includes an advertisement DB 23 that stores an advertisement content approved in the examination in association with a medium ID of the digital signage 2 selected as the distribution destination of the advertisement content. The processor 31 has a function of distributing the advertisement content stored in the advertisement DB 23 to the digital signage 2 identified by the medium ID associated with the advertisement content, for example, on a regular basis. In this manner, an image of the advertisement content distributed to the digital signage 2 is displayed on the display apparatus 2A of the digital signage 2 in accordance with a predetermined schedule. That is, an advertisement of the advertisement content is transmitted using the digital signage 2.

Therefore, according to the advertisement management server 1 operating as described above, it is possible to realize the system that provides access to the digital signage 2 through the Internet to receive an application for inserting an advertisement and transmits an advertisement content, which is applied from an advertisement client, from the digital signage 2 based on the client's demand.

As a result, the advertisement client can transmit a desired advertisement by using digital signage 2 installed in stores, public facilities, transportation facilities, and the like throughout the country by only operating the client terminal 3, and thus it is possible to realize a high advertisement effect at a low cost. In addition, since the digital signage 2 is effectively utilized as an advertisement medium, the owner of the digital signage 2 can expect effects such as an increase in an operation rate of the digital signage 2 and an increase in sales using the digital signage 2. In addition, an advertisement content displayed on the digital signage 2 is limited to an advertisement content which is previously examined and approved by the owner of the digital signage 2. Therefore, for example, it is possible to prevent a problem that an advertisement disadvantageous to the owner is transmitted from the digital signage 2, and thus the owner can use the digital signage 2 as an advertisement medium without anxiety.

The medium information stored in the medium DB 21 includes amount information regarding a cost of the advertisement in the digital signage 2. The processor 31 has a function of calculating an estimated cost of the advertisement content approved in the examination on the basis of the amount information and notifying the client terminal 3, which places the advertisement content, of the estimated cost. Therefore, the advertisement client can easily know the estimated cost in a case where advertisement is performed by the digital signage 2.

In addition, the processor 31 registers an advertisement content placed from the client terminal 3 in the advertisement DB 23 in association with the medium ID of the digital signage 2 which is selected as the distribution destination of the advertisement content, in a case where a response indicating agreement with the estimated cost is given from the client terminal 3. Therefore, the advertisement record 23R registered in the advertisement DB 23 is limited to an advertisement record which is approved by the owner of the digital signage 2 and is agreed by the advertisement client. As a result, a problem that an advertisement which is not approved by the owner is transmitted from the digital signage 2 or an advertisement is transmitted from the digital signage 2 which is not agreed by the client may not occur.

Further, the processor 31 has a function of calculating a cost required for the displaying an advertisement content distributed to the digital signage 2 and notifying the client terminal 3, which places the advertisement content, of the cost. Therefore, the cost required for the advertisement is automatically calculated and is notified to the advertisement client, and thus a system manager can also execute the charging of the cost on behalf of the owner.

Hereinafter, a modification example of the embodiment will be described.

In the embodiment, in Act6 and Act7 of FIG. 6, a step of obtaining agreement from an advertisement client is introduced. This step is not necessarily required. That is, when it is detected that approval is obtained in the examination in Act5 of FIG. 6, the processor 31 may register a new advertisement record 23R in the advertisement DB 23 in Act8. The processor 31 selects the digital signage 2 conforming to the placement conditions of the advertisement client in Act12 of FIG. 7. Therefore, the digital signage 2 obtaining the advertisement client's agreement conforms to the placement conditions of the advertisement client, which does not cause a serious problem even when the digital signage does not obtain agreement from the advertisement client.

In the embodiment, the digital signage 2 is described as an example as an advertisement medium. The advertisement medium is not limited to the digital signage 2. For example, there is a Point Of Sales (POS) system that confirms that various pieces of advertisement information are printed on a paper receipt issued from a POS terminal. Such a paper receipt of the system may also serve as the advertisement medium of this embodiment. In addition, there is an electronic receipt system that distributes electronic receipt data to a customer. Such an electronic receipt of the system may also serve as the advertisement medium of this embodiment. In addition, the POS terminal includes a display for notifying a consumer of information such as a buying amount. Such a display may also serve as the advertisement medium of this embodiment. In addition, the digital signage, a paper receipt, an electronic receipt, a consumer display, and the like may be combined as the advertisement medium.

In the embodiment, the advertisement management server 1 calculates a charging amount. In this regard, a configuration may also be applied in which the charging amount is calculated on the digital signage 2 side, and the amount is notified to an advertisement client through the advertisement management server 1.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

**Claims**

1.  A server for managing content distribution to a plurality of display devices making up a digital signage, the server comprising:

    a communication interface in communication with a plurality of display devices, a first terminal corresponding to a client content provider, and a second terminal;
    a storage device that stores:

       a display device database including, for each of the plurality of display devices: a display device identifier, display device attribute data, and display device owner data, and
       a content management database configured to store a plurality of content items each in association with at least one of the display device identifiers; and

    a processor configured to:

       receive, from the first terminal, a display request to display a content item on a selected one of the plurality of display devices, the display request including the requested content item and display criteria,
       identify a selected display device for which the corresponding display device attribute data matches the display criteria,
       transmit an approval request to the second terminal identified based on the display device owner data, the approval request including the requested content item,
       receive, from the second terminal and in response to the approval request, approval to display the content item on the selected display device,
       after the approval is received, store the content item in the content management database in association with the display device identifier corresponding to the selected display device, and
       control the selected display device to display the content item in accordance with the display request.

2.  The server according to claim 1, wherein the display device attribute data includes location information indicating a physical location of a corresponding display device.

3.  The server according to claim 1 or 2, wherein selected display device is identified by comparing location criteria included in the display criteria to the location information.

4. The server according to any one of claims 1 to 3, wherein:

   the display request further includes a requested time for displaying the content item, and
   the processor is configured to control the selected display device to display the content item during the requested time.

5. The server according to any one of claims 1 to 4, wherein:

   the storage device further stores a client database including a plurality of client identifiers and corresponding client attribute data, each client identifier and client attribute data corresponding to a different client content provider, and
   the display request includes a client identifier corresponding to a client content provider associated with the first terminal.

6. The server according to any one of claims 1 to 5, wherein:

   the display device attribute data includes amount information regarding a cost of displaying a content item in the corresponding display device, and
   the processor is further configured to:

      calculate an estimated cost of displaying the content item included in the display request on the basis of the amount information, and
      notify the first terminal of the estimated cost.

7. The server according to any one of claims 1 to 6, wherein the plurality of display devices are each digital display devices.

8. The server according to any one of claims 1 to 7, wherein the plurality of display devices are each point of sale devices that display the content item by printing the content item on a receipt.

9. The server according to any one of claims 1 to 8, wherein the plurality of display devices are each point of sale devices that display the content item by adding the content item to an electronic receipt.

10. A digital signage control system including the server according to any one of claims 1 to 9.

11. A method for managing content distribution comprising steps of:

    storing a display device database including, for each of a plurality of display devices: a display device identifier, display device attribute data, and display device owner data;
    receiving, from a first terminal, a display request to display a content item on a selected one of the plurality of display devices, the display request including the requested content item and display criteria;
    identifying a selected display device for which the corresponding display device attribute data matches the display criteria; transmitting an approval request to a second terminal identified based on the display device owner data, the approval request including the requested content item;
    receiving, from the second terminal and in response to the approval request, approval to display the content item on the selected display device;
    after the approval is received, storing the content item in association with the display device identifier corresponding to the selected display device; and
    controlling the selected display device to display the content item in accordance with the display request.

12. The method according to claim 11, further comprising step of:

    storing a client database including a plurality of client identifiers and corresponding client attribute data, each client identifier and client attribute data corresponding to a different client content provider, wherein the display request includes a client identifier corresponding to a client content provider associated with the first terminal.

13. The method according to claim 11 or 12, wherein the display device attribute data includes amount information regarding a cost of displaying a content item in the corresponding display device, the method further comprising steps of:

calculating an estimated cost of displaying the content item included in the display request on the basis of the amount information; and
notifying the first terminal of the estimated cost.

14. A non-transitory computer readable medium containing executable instructions that cause a server to perform the method according to any one of claims 11 to 13.

## FIG. 1

## FIG. 2

21R

| CLIENT ID | CLIENT INFORMATION |
|---|---|

CLIENT INFORMATION:
- ACCOUNT
- TYPE OF BUSINESS
- CONTACT INFORMATION

## FIG. 3

22R

| MEDIUM ID | MEDIUM INFORMATION | OWNER INFORMATION |
|---|---|---|

MEDIUM INFORMATION:
- LOCATION
- INSTALLATION ENVIRONMENT
- TYPE
- OPERATION TIME
- UNIT PRICE

OWNER INFORMATION:
- CONTACT INFORMATION
- BASIC CHARGE
- CHARGING DATE

## FIG. 4

23R

| ADVERTISEMENT ID | MEDIUM ID | ADVERTISEMENT INFORMATION | CHARGING INFORMATION |
|---|---|---|---|

ADVERTISEMENT INFORMATION:
- CONTENT
- CLIENT ID
- ADVERTISEMENT PERIOD
- ADVERTISEMENT TIME
- NUMBER OF TIMES OF ADVERTISEMENT

CHARGING INFORMATION:
- ESTIMATED COST
- BASIC CHARGE
- ADVERTISEMENT COST
- NUMBER OF TIMES OF DISTRIBUTION
- CHARGING AMOUNT

# FIG. 5

```
              ┌─────────────────┐
              │   PROCESSOR     │───31
              └────────┬────────┘
                       │
┌─────────────┐        │        ┌─────────────────────┐
│ MAIN MEMORY │◄──────►│◄──────►│ AUXILIARY STORAGE    │───33
└─────────────┘        │        │       DEVICE         │
     32                │        └─────────────────────┘
                       │
┌─────────────┐        │        ┌─────────────────────┐
│  TIMEPIECE  │◄──────►│◄──────►│   COMMUNICATION      │───35
└─────────────┘        │        │     INTERFACE        │
     34                │        └─────────────────────┘
                      36
```

EP 3 379 483 A1

# FIG. 6

PLACEMENT MANAGEMENT UNIT

# FIG. 7

EXAMINATION MANAGEMENT UNIT

START

Act11
IS PLACEMENT DATA STORED? — NO

YES

SELECT DIGITAL SIGNAGE — Act12

Act13
IS DIGITAL SIGNAGE SELECTED? — NO

YES

STORE MEDIUM RECORD — Act14

ACQUIRE CONTACT INFORMATION OF OWNER — Act15

REQUEST EXAMINATION — Act16

Act17
IS APPROVAL OBTAINED? — NO

YES

SET APPROVAL FLAG — Act18

STORE ESTIMATED COST — Act19

END

# FIG. 8

DISTRIBUTION MANAGEMENT UNIT

START

Act21 — IS DATE UPDATED? — NO

YES

RETRIEVE ADVERTISEMENT DB — Act22

Act23 — IS OBJECT TO BE DISTRIBUTED PRESENT? — NO

YES

END

DISTRIBUTION — Act24

NUMBER OF TIMES OF DISTRIBUTION+1 — Act25

UPDATE CHARGING AMOUNT — Act26

Act27 — DOES CHARGING DATE MATCH UPDATED DATE? — NO

YES

NOTIFY ADVERTISEMENT CLIENT OF CHARGING AMOUNT — Act28

Europäisches Patentamt

European Patent Office

Office européen des brevets

# EUROPEAN SEARCH REPORT

Application Number

EP 18 16 2183

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/136133 A1 (LI YVONNE [US]) 14 June 2007 (2007-06-14) * figures 1,2,3,6,7 * * paragraph [0001] - paragraph [0012] * * paragraph [0018] - paragraph [0030] * * paragraph [0032] - paragraph [0041] * * paragraph [0042] - paragraph [0068] * ----- | 1-14 | INV. G06Q30/02 |
| X | US 2015/154633 A1 (CROW DAVID [US] ET AL) 4 June 2015 (2015-06-04) * abstract; figures 1-3 * * paragraph [0001] - paragraph [0007] * * paragraph [0011] - paragraph [0077] * ----- | 1-14 | |

TECHNICAL FIELDS SEARCHED (IPC)

G06Q

The present search report has been drawn up for all claims

| Place of search | Date of completion of the search | Examiner |
|---|---|---|
| The Hague | 10 July 2018 | Carpintero, Diego |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 16 2183

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2018

| Patent document cited in search report | | Publication date | Patent family member(s) | | Publication date |
|---|---|---|---|---|---|
| US 2007136133 | A1 | 14-06-2007 | US 2007136133 A1 | | 14-06-2007 |
| | | | WO 2007070537 A2 | | 21-06-2007 |
| US 2015154633 | A1 | 04-06-2015 | AU 2014302644 A1 | | 28-01-2016 |
| | | | CA 2916597 A1 | | 31-12-2014 |
| | | | EP 3014873 A2 | | 04-05-2016 |
| | | | US 2015154633 A1 | | 04-06-2015 |
| | | | WO 2014210003 A2 | | 31-12-2014 |

EPO FORM P0459

For more details about this annex : see Official Journal of the European Patent Office, No. 12/82